# EUROPÄISCHE PATENTSCHRIFT

(11) **EP 1 628 044 B1**
(45) Veröffentlichungstag und Bekanntmachung des Hinweises auf die Patenterteilung: **02.04.2008**
(21) Anmeldenummer: 05015388.1
(22) Anmeldetag: 15.07.2005
(51) Int. Cl.: F16H 25/24

(54) **Kugelgewindetrieb**
Ball screw
Vis d'entraînement à billes

(30) Priorität: 20.08.2004 DE 102004040360
(43) Veröffentlichungstag der Anmeldung: 22.02.2006
(73) Patentinhaber: Schaeffler KG, 91074 Herzogenaurach (DE)
(72) Erfinder: Osterlänger, Jürgen, 91448 Emskirchen (DE); Adler, Dieter, 91074 Herzogenaurach (DE); Kraus, Manfred, Dr., 91074 Herzogenaurach (DE); Mayer, Ralf, 91074 Herzogenaurach (DE)

(56) Entgegenhaltungen:
- US-A- 3 367 201
- US-A- 3 722 641
- US-A- 4 542 661
- US-A- 5 251 365
- US-A1- 2003 192 734

## Beschreibung

### Gebiet der Erfindung

Die vorliegende Erfindung betrifft einen Kugelgewindetrieb. Kugelgewindetriebe sind Rot-Transgetriebe, die eine rotative in eine translatorische Bewegung oder umgekehrt umwandeln. Derartige Kugelgewindetriebe finden zunehmend Anwendung auch im Kfz-Bereich. Beispielsweise als Bestandteil einer Lenkunterstützung für eine Zahnstangenlenkung. In diesem Fall ist ein elektromotorischer Antrieb vorgesehen, wobei der vom Motor angetriebene Kugelgewindetrieb eine translatorische Bewegung der Zahnstange unterstützt.

Aus DE 102 58 826 A1 beispielsweise ist eine Antriebseinrichtung mit einem Wälzkörpergewindetrieb bekannt geworden, in dessen quer zur Rotationsachse in zwei Gehäuseteile geteiltes Gehäuse ein hohler Rotor angeordnet und mittels einer Wälzlagerung drehbar gelagert ist. Durch den Rotor ist eine Kugelrollspindel des Wälzkörpergewindetriebs hindurchgeführt. Die Wälzlagerung ist an dem Gehäuse vorgesehen. Der Außenring des Wälzlagers ist an seinem Innenumfang mit zwei Kugelrillen versehen. An der Spindelmutter sind ebenfalls Kugelrillen ausgebildet. Kugeln an den Kügelrillen der Spindelmutter und des Außenringes ab. Bei derartigen Antriebseinrichtungen überträgt die Wälzlagerung der Spindelmutter hohe axiale Kräfte. Der Außenring des Wälzlagers muss demzufolge gegen axiale Verschiebung gesichert sein. Vorliegend ist dies durch eine konstruktive Maßnahme gelöst, bei der eine Axialscheibe mit einer Stirnseite sowohl an der Stirnfläche des Außenrings als auch an einer stirnseitigen Gehäusewand des Gehäuses und mit ihrer anderen Stirnseite an einer ebenfalls an dem Gehäuse abgestützten Stützhülse anliegt. Die Montage dieses Kugelgewindetriebes in das Gehäuse ist somit sehr aufwendig.

Ein weiterer Kugelgewindetrieb ist aus US2003/0192734 bekannt (beinhaltet die Merkmale des Oberbegriffs des Anspruchs 1).

Aufgabe der vorliegenden Erfindung ist es, einen Kugelgewindetrieb nach den Merkmalen des Oberbegriffs des Anspruchs 1 anzugeben, der einfach zu montieren ist.

Erfindungsgemäß wird diese Aufgabe dadurch gelöst, dass der Außenring einen die Spindelmutter umgreifenden Ring mit einer an seinem Innenumfang ausgebildeten Lagerlauffläche und einen an den Ring anschließenden Radialflansch aufweist, wobei der Radialflansch an dem Gehäuse festlegbar ist. Bei der erfindungsgemäßen Kugelgewindetrieb ist die Anzahl der zur axialen Festlegung erforderlichen Teile erheblich reduziert. Lediglich ein einziges Bauteil kann erfindungsgemäß ausreichend sein, um die gewünschte axiale Sicherung des Außenrings zu gewährleisten.

Vorzugsweise ist der Außenring im Längsschnitt gesehen L-förmig gebildet, wobei der Radialflansch an ein axiales Ende des Ringes anschließt. Der Radialflansch und der Ring können miteinander verschweißt sein. Es ist jedoch zweckmäßig und vorteilhaft, wenn der Radialflansch einstückig an den Ring angeformt ist. Dies läßt sich in wirtschaftlicher Weise in einem Umformverfahren, insbesondere durch Tiefziehen an einem Blechteil umsetzen. Der Radialflansch ist vorzugsweise axial versetzt zu der Lagerlauffläche angeordnet. Dies kann den Vorteil bieten, dass zwar der Radialflansch axial benachbart zu dem Antriebsrad angeordnet ist, jedoch der Ring des Außenringes mit seiner Lagerlauffläche innerhalb des Antriebsrades angeordnet sein kann. Wenn beispielsweise der Kugelgewindetrieb mittels eines Zugmitteltriebes angetrieben wird, umschlingt beispielsweise ein Zahnriemen eine das Antriebsrad bildende Zahnscheibe. Die auf diese Weise in das Antriebsrad eingeleitete radial Kraftkomponente des Zugmitteltriebes kann nun aufgrund der verschachtelten Anordnung des Antriebsrades und des Ringes des Außenringes ohne große Hebel eingeleitet werden. Kippmomente sind deutlich reduziert. Vorzugsweise ist die Lagerlauffläche in einer gemeinsamen Ebene mit der radialen Kraftkomponente aus dem Zugmitteltrieb angeordnet. In diesem Fall entstehen überhaupt keine Kippmomente.

Ein weiterer erfindungsgemäßer Aspekt sieht vor, dass der Radialflansch einen Außendurchmesser aufweist, der größer ist als der Außendurchmesser des Antriebsrades. Wenn beispielsweise das Gehäuse quer zur Spindelachse geteilt ist, und eine Öffnung mit einem Durchmesser aufweist, die zur Aufnahme des Antriebsrades vorgesehen ist, kann der Radialflansch derart dimensioniert sein, dass er stirnseitig mit seinem Rand an einem Gehäuseflansch zur Anlage kommt. Nun kann beispielsweise die andere Gehäusehälfte aufgesetzt werden, wobei dann dieser Rand des Radialflansches zwischen diesen beiden Gehäusehälften eingespannt ist. Einerseits ist auf diese Weise sichergestellt, dass der Außenring einwandfrei in axialer Richtung festgelegt ist, und somit auch die Spindelmutter. Dies insbesondere dann, wenn das Wälzlager durch ein Rillenkugellager gebildet ist, bei dem Kugeln an Kugelrillen des Außenringes und der Spindelmutter abwälzen. Weiterhin ist jedoch bei dieser Anordnung sichergestellt, dass der nach radial innen in die Öffnung des Gehäuses hineinragende Bereich des Radialflansches nicht abgestützt ist. Diese konstruktive Anordnung kann nun zusätzlich genutzt werden, sofern der Radialflansch elastisch verformbar ausgeführt ist. Denn nun können Kippbewegungen des Außenrings um die Spindelachse möglich sein. Kippbewegungen können zum Beispiel verhindern, dass die Kugelrollspindel gegenüber dem Wälzlager verspannt ist. Derartige Verspannungen können zum Ausfall des Wälzlagers führen. Derartige Kippbewegungen können jedoch auch Wärmedehnungen kompensieren. Wenn beispielsweise ein erfindungsgemäßer Kugelgewindetrieb ais Lenkunterstützung für die Zahnstangenlenkung eines Kraftfahrzeuges eingesetzt wird, können derartige Lenkunterstützungen großen Temperaturschwankungen ausgesetzt sein, die durchaus Temperaturdifferenzen von 100 Grad betragen können. Die bei dieser Temperaturdifferenz auftretenden Wärmedehnungen können erfindungsgemäß durch einen geeignet verformbar ausgeführten Radialflansch einwandfrei kompensiert werden, ohne dass zusätzliche Bauteile erforderlich sind.

Die Übertragung von Körperschall kann zu Geräuschbildung führen, die beispielsweise von dem Fahrer eines Kraftfahrzeuges als störend empfunden wird. Geräuschquelle kann beispielsweise der Kugelgewindetrieb sein. Eine erfindungsgemäße Weiterbildung sieht vor, den Radialflansch unter Zwischenschaltung eines körperschalldämmenden Elementes an dem Gehäuse festzulegen ohne dass ein metallischer Kontakt zwischen dem Radialflansch und dem Gehäuse stattfindet. Beispielsweise kann der Radialflansch mit Bohrungen versehen sein, in die das körperschalldämmende Element verliersicher angeordnet ist. Dieses Körperschall dämmende Element kann den Radialflansch stirnseitig zu beiden Seiten überragen. Wenn nun wie beschrieben der Radialflansch zwischen zwei Bauteilen eingespannt ist, kommen nicht Stirnflächen des Radialflansches, sondern vielmehr die überstehenden Bereiche des Körperschall dämmenden Elementes zur Anlage an diese beiden Bauteile, beispielsweise Gehäusehälften. Auf diese Weise ist zum einen sichergestellt, dass der Radialflansch einwandfrei festgelegt ist, gleichzeitig ist ein direkter metallischer Kontakt des Radialflansches mit dem Gehäuse verhindert.

Nachstehend wird die Erfindung anhand von drei in insgesamt fünf Figuren abgebildeten Ausführungsbeispiel näher erläutert. Es zeigen:
- Figur 1: einen Längsschnitt durch einen erfindungsgemäßen Kugelgewindetrieb,
- Figur 2: eine axiale Draufsicht auf den Kugelgewindetriebes gemäß Figur 1,
- Figur 3: eine Lenkunterstützung für die Zahnstangenlenkung eines Kraftfahrzeuges mit einem erfindungsgemäßen Kugelgewindetrieb nach Figur 1,
- Figur 4: einen Teillängsschnitt durch einen weiteren erfindungsgemäßen Kugelgewindetrieb und
- Figur 5: einen weiteren Teillängsschnitt durch einen erfindungsgemäßen Kugelgewindetrieb.

### Ausführliche Beschreibung der Zeichnung

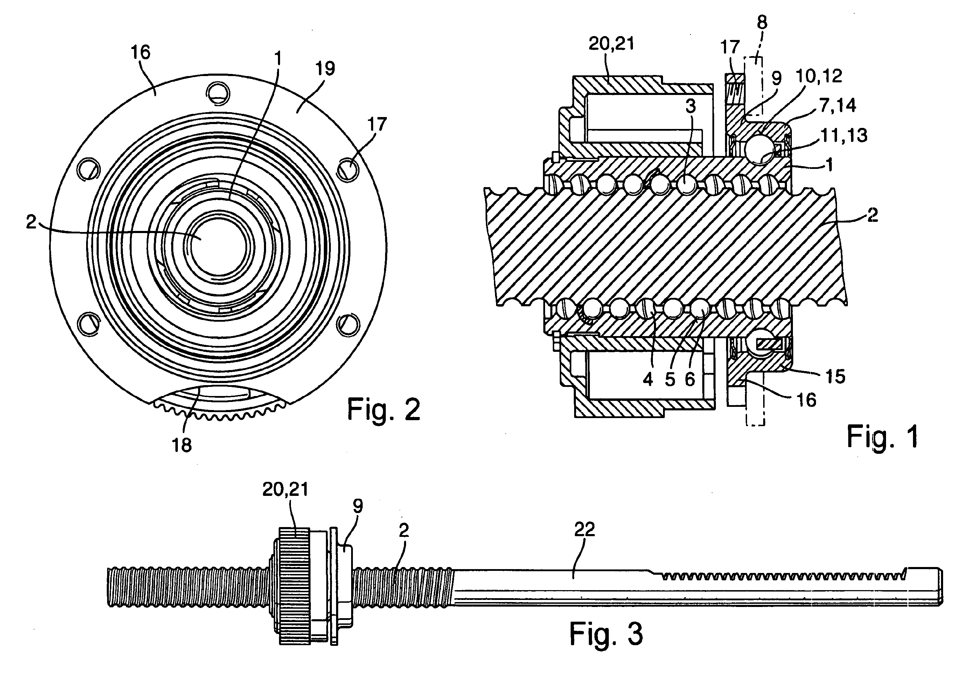

Bei dem erfindungsgemäßen Kugelgewindetrieb nach den Figuren 1 und 2 ist eine Spindelmutter 1 auf einer Kugelrollspindel 2 über Kugeln 3 drehbar gelagert. In bekannter Weise rollen die Kugeln 3 in endlosen Kugelkanälen 4 um. Die Kugeln 3 wälzen an Kugelrillen 5, 6 der Spindelmutter 1 und der Kugelrollspindel 2 ab.

Die Spindelmutter 1 ist über ein Wälzlager 7 an einem Gehäuse 8 axial und radial gelagert, wobei das Gehäuse 8 in der Figur 1 lediglich angedeutet ist. Dieses Gehäuse 8 umfaßt den vollständigen Kugelgewindetrieb, wie weiter unten in weiteren Ausführungsbeispielen noch beschrieben wird.

Das Wälzlager 7 umfaßt einen Außenring 9, der die Spindelmutter 1 umgreift. Der Außenring 9 und die Spindelmutter 1 sind an einander zugewandten Umfangsflächen mit Lagerlaufflächen 10, 11 versehen, die vorliegend als einstückig an die Spindelmutter 1 und den Außenring 9 angeformte Kugelrillen 12, 13 ausgebildet sind. Das Wälzlager 7 bildet demzufolge ein Rillenkugellager 14.

Der Außenring 9 ist im Längsschnitt gesehen etwa L-förmig ausgebildet. Der Außenring 9 umfaßt einen die Spindelmutter 1 umgreifenden Ring 15, der koaxial zur Spindelachse angeordnet ist. Ferner umfasst der Außenring 9 einen Radialflansch 16, der sich im Wesentlichen quer zur Spindelachse nach radial außen erstreckt. Der Ring und der Radialflansch sind einstückig miteinander verbunden. Dieser Außenring 9 ist im Tiefziehverfahren aus Blech gebildet. Der Radialflansch 16 weist mehrere über den Umfang verteilt angeordnete Gewindebohrungen 17 auf, und eine konkav geformte Aussparung 18 zur einwandfreien Positionierung der Drehlage des Außenringes 9 in dem Gehäuse 8. Die Gewindebohrungen 17 sind an einem radial äußeren Rand 19 des Radialflansches 16 angeordnet. Das Gehäuse 8 ist mit hier nicht weiter abgebildeten Durchgangsöffnungen zum Durchführen von ebenfalls nicht abgebildeten Gewindeschrauben versehen, um den Radialflansch 16 mit de Gehäuse 8 zu verschrauben. Auf diese Weise ist sichergestellt, dass das Rillenkugellager 14 und somit die Spindelmutter 1 an dem Gehäuse 8 axial und radial gelagert ist.

Auf der Spindelmutter 1 ist ein Antriebsrad 20 drehfest angeordnet. Dieses Antriebsrad 20 ist vorliegend durch eine Zahnriemenscheibe 21 gebildet. Die Zahnriemenscheibe 21 ist von einem hier nicht abgebildeten Zahnriemen umschlungen, der zum Antreiben der Spindelmutter 1 vorgesehen ist.

Figur 3 zeigt eine Lenkunterstützung für die Zahnstangenlenkung eines Kraftfahrzeuges. Eine Zahnstange 22 ist in axialer Verlängerung als Kugelrollspindel 2 ausgebildet. Auf der Kugelrollspindel 2 ist der zuvor beschriebene Kugelgewindetrieb angeordnet.

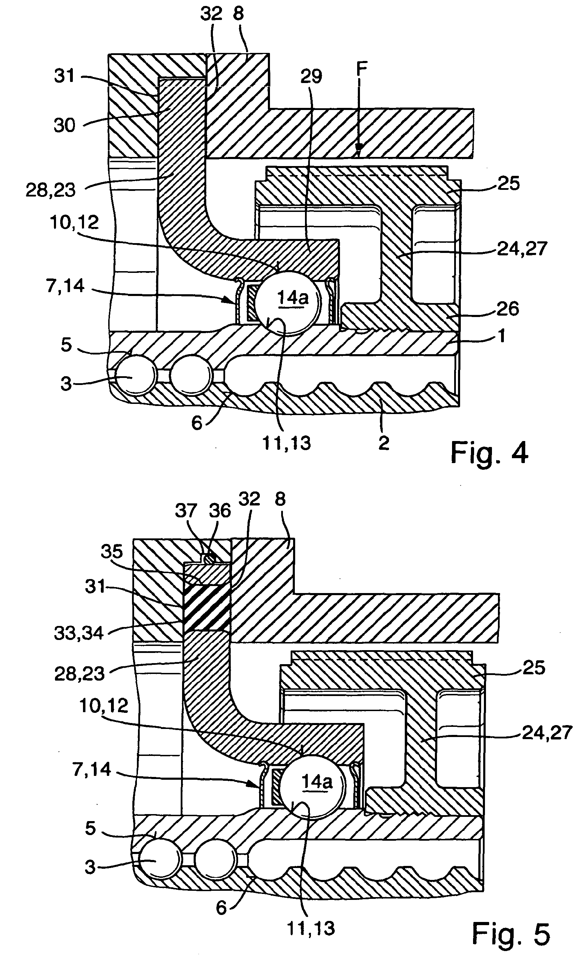

Der in Figur 4 abgebildete erfindungsgemäße Kugelgewindetrieb unterscheidet sich von den in den Figuren 1 bis 3 beschriebenen Kugelgewindetrieb durch einen modifizierten Außenring 23 und unterschiedlicher Anordnung des Rillenkugellagers14, wobei ein modifiziertes Antriebsrad 24 eingesetzt ist.

Das Antriebsrad 24 umfaßt einen Antriebskranz 25, den ein hier nicht abgebildeter Zahnriemen umschlingt. Dieser Antriebskranz 25 ist mit einer drehfest auf der Spindelmutter 1 angeordneten Antriebsnabe 26 über einen Flansch 27 verbunden. In der einen axialen Richtung schließen die Antriebsnabe 26 und der Antriebskranz 25 bündig ab. Zur anderen axialen Richtung hin überragt der Antriebskranz 25 die Antriebsnabe 26 deutlich. Innerhalb dieses überragenden Bereiches ist das Rillenkugellager 14 angeordnet.

Der Außenring 23 ist aus Blech im Tiefziehverfahren hergestellt und ebenfalls im Längsschnitt gesehen L-förmig gebildet. Ein Radialflansch 28 ist an dem Gehäuse 8 festgelegt. Ein einstückig an den Radialflansch 28 angeformter Ring 29 umgreift die Spindelmutter 1 und ist an seinem Innenumfang mit der Kugelrille 12 versehen. Der Radialflansch 28 ist mit seinem radial außen liegenden Rand 30 zwischen zwei Gehäusehälften des Gehäuses 8 eingespannt. Auf diese Weise ist sichergestellt, dass das Rillenkugellager 14 und somit die Spindelmutter 1 axial und radial festgelegt ist. Der Figur 4 ist zu entnehmen, dass die Gehäusehälften Spannflächen 31, 32 aufweisen, zwischen denen der Rand 30 eingespannt ist. Der Radialflansch 28 ist vorliegend hinreichend elastisch verformbar, dass beispielsweise Wärmedehnungen durch eine entsprechende elastische Auslenkung des Radialflansches 28 kompensiert werden können.

Der Figur 4 ist ferner zu entnehmen, dass der Außendurchmesser des Radialflansches 28 größer ist als der Außendurchmesser des Antriebsrades 24. Auf diese Weise ist in vorteilhafter Weise ermöglicht, dass der Kugelgewindetrieb in die eine Gehäusehälfte eingeführt werden kann, bis der Radialflansch 28 mit seinem Rand 30 an die Spannfläche 32 der Gehäusehälfte des Gehäuse 8 zur Anlage kommt. Nun kann die zweite Gehäusehälfte des Gehäuses 8 aufgesetzt werden, wobei die Spannfläche 31 gegen den Rand 30 des Radialflansches 28 angepreßt wird.

Der in Figur 5 abgebildete erfindungsgemäße Kugelgewindetrieb unterscheidet sich von dem aus der Figur 4 lediglich dadurch, dass durch konstruktive Maßnahmen ein direkter metallischer Kontakt zwischen dem Außenring 23 und dem Gehäuse 8 vermieden ist. Dies wird vorliegend dadurch erreicht, dass an mehreren über den Umfang verteilt angeordneten Stellen körperschalldämmende Elemente 33 an dem Radialflansch 28 befestigt sind, die zur Anlage an die Spannflächen 31, 32 der Gehäusehälften des Gehäuses 8 kommen. Vorliegend ist das körperschalldämmende Element 33 durch Gummieinsätze 34 gebildet, die in Bohrungen 35 des Radialflansches 28 eingesetzt sind. Wenn der Radialflansch 28 nicht eingespannt ist, überragen diese Gummieinsätze 34 den Radialflansch 28 zu dessen beiden Stirnseiten. Während diese Gummieinsätze 34 den direkten metallischen Kontakt in axialen Richtungen verhindern, sorgt in radialer Richtung ein Gummiring 36 dafür, dass der Radialflansch 28 nicht in direktem metallischen Kontakt mit dem Gehäuse 8 steht. Der Gummiring 36 ist in eine Ringnut 37 des Gehäuses 8 eingesetzt. Der Radialflansch 28 kommt mit seiner Umfangsfläche an den Gummiring 36 zur Anlage.

Die beiden in den Figuren 4 und 5 abgebildeten erfindungsgemäßen Kugelgewindetriebe weisen den Vorteil auf, dass die Wirkebene einer radialen Kraftkomponente, die von dem nicht dargestellten Riemen auf das Antriebsrad 24 übertragen wird in lediglich geringem axialen Abstand zum Rillenkugellager 14 angeordnet ist. Das bedeutet, dass auf das Rillenkugellager 14 einwirkenden Kippmomente reduziert sind. Die Reduzierung des Kippmomentes wird durch die erfindungsgemäße Ausbildung des Außenrings 23 des Rillenkugellagers 14 möglich.

### Bezugszahlenliste

- 1: Spannmutter
- 2: Kugelrollspindel
- 3: Kugel
- 4: Kugelkanal
- 5: Kugelrille
- 6: Kugelrille
- 7: Wälzlager
- 8: Gehäuse
- 9: Außenring
- 10: Lagerlauffläche
- 11: Lagerlauffläche
- 12: Kugelrille
- 13: Kugelrille
- 14: Rillenkugellager
- 14a: Kugel
- 15: Ring
- 16: Radialflansch
- 17: Gewindebohrung
- 18: Aussparung
- 19: Rand
- 20: Antriebsrad
- 21: Zahnriemenscheibe
- 22: Zahnstange
- 23: Außenring
- 24: Antriebsrad
- 25: Antriebskranz
- 26: Antriebsnabe
- 27: Flansch
- 28: Radialflansch
- 29: Ring
- 30: Rand
- 31: Bandfläche
- 32: Bandfläche
- 33: körperschalldämmendes Element
- 34: Gummieinsatz
- 35: Bohrung
- 36: Gummiring
- 37: Ringnut

## Patentansprüche

1. Kugelgewindetrieb, mit einer auf einer Kugelrollspindel (2) drehbar angeordneten Spindelmutter (1), zwischen der und der Kugelrollspindel (2) Kugeln (3) an Kugelrillen (4, 5) abwälzen, und mit einem drehfest mit der Spindelmutter (1) verbundenen Antriebsrad (20, 26) zum Antreiben der Spindelmutter (1), wobei die Spindelmutter (1) mittels eines Lagers, insbesondere Wälzlager (7), an einem Gehäuse (8) lagerbar ist, wobei das Lager einen an dem Gehäuse (8) festlegbaren Außenring (9, 23) aufweist, **dadurch gekennzeichnet, dass** der im Längsschnitt gesehen L-förmige Außenring (9, 23) einen die Spindelmutter (1) umgreifenden Ring (15, 29) mit einer an seinem Innenumfang ausgebildeten Lagerlauffläche (10, 11) und einen an ein axiales Ende des Ringes (15, 29) einstückig anschließenden Radialflansch (16, 28) aufweist, wobei der Radialflansch (16, 28) an dem Gehäuse (8) festlegbar ist, und wobei der Radialflansch (28) einen Außendurchmesser aufweist, der größer ist als der Außendurchmesser des Antriebsrades (24).

2. Kugelgewindetrieb nach Anspruch 1, bei dem der Außenring (9, 23) aus Blech in einem Umformverfahren, insbesondere durch Tiefziehen, gebildet ist.

3. Kugelgewindetrieb nach Anspruch 1, bei dem der Radialflansch (16, 28) axial versetzt zu der Lagerlauffläche (10, 11) angeordnet ist.

4. Kugelgewindetrieb nach Anspruch 1, bei dem die Lagerlauffläche (10, 11) axial innerhalb des Antriebsrades (26) angeordnet ist.

5. Kugelgewindetrieb nach Anspruch 4, bei dem eine auf das Antriebsrad einwirkende Kraft in einer gemeinsamen Ebene mit der Lagerlauffläche angeordnet ist.

6. Kugelgewindetrieb nach Anspruch 1, bei dem die Spindelmutter (1) an ihrem Außenumfang mit einer einstückig angeformten Lagerlauffläche (11) versehen ist, die mit der Lagerlauffläche (10) des Außenrings (9), vorzugsweise unter Zwischenschaltung von an den Lagerlaufflächen (10, 11) abwälzenden Wälzkörpern zusammenwirkt.

7. Kugelgewindetrieb nach Anspruch 1, bei dem der Radialflansch (28) derart elastisch verformbar ausgeführt ist, dass bei eingespanntem Rand (30) des Radialflansches (28) Kippbewegungen des Außenrings (23) um die Spindelachse möglich sind.

8. Kugelgewindetrieb nach Anspruch 1, bei dem der Radialflansch (28) unter Zwischenschaltung eines körperschalldämmender Elementes (33) an dem Gehäuse (8) festlegbar ist ohne metallischen Kontakt des Radialflansches (28) mit dem Gehäuse (8).

## Claims

1. Ball screw mechanism, with a spindle nut (1) which is arranged rotatably on a ball-rolling spindle (2) and between which and the ball-rolling spindle (2) balls (3) roll on ball grooves (4, 5), and with a driving wheel (20, 26), connected fixedly in terms of rotation to the spindle nut (1), for driving the spindle nut (1), the spindle nut (1) being capable of being mounted on a housing (8) by means of a bearing, in particular a rolling bearing (7), the bearing having an outer ring (9, 23) capable of being fixed to the housing (8), **characterized in that** the outer ring (9, 23) which is L-shaped, as seen in longitudinal section, has a ring (15, 29) surrounding the spindle nut (1), and with a bearing running surface (10, 11) formed on the inner circumference of said ring, and a radial flange (16, 28) integrally adjoining an axial end of the ring (15, 29), the radial flange (16, 28) being capable of being fixed to the housing (8), and the radial flange (28) having an outside diameter which is larger than the outside diameter of the driving wheel (24).

2. Ball screw mechanism according to Claim 1, in which the outer ring (9, 23) is formed from sheet metal in a forming method, in particular by deep drawing.

3. Ball screw mechanism according to Claim 1, in which the radial flange (16, 28) is arranged so as to be axially offset with respect to the bearing running surface (10, 11).

4. Ball screw mechanism according to Claim 1, in which the bearing running surface (10, 11) is arranged axially within the driving wheel (26).

5. Ball screw mechanism according to Claim 4, in which a force acting on the driving wheel is arranged in a common plane with the bearing running surface.

6. Ball screw mechanism according to Claim 1, in which the spindle nut (1) is provided on its outer circumference with a bearing running surface (11) which is integrally formed in one piece and which cooperates with the bearing running surface (10) of the outer ring (9), preferably with rolling bodies rolling on the bearing running surfaces (10, 11) being interposed.

7. Ball screw mechanism according to Claim 1, in which the radial flange (28) is designed to be elastically deformable in such a way that, with the edge (30) of the radial flange (28) being clamped, tilting movements of the outer ring (23) about the spindle axis are possible.

8. Ball screw mechanism according to Claim 1, in which the radial flange (28) can be fixed to the housing (8), with an element (33) insulating solid-borne sound being interposed, without metallic contact between the radial flange (28) and the housing (8).

## Revendications

1. Vis d'entraînement à billes, avec un écrou de broche (1) disposé en rotation sur une broche filetée à billes (2), entre lequel et la broche filetée à billes (2), des billes (3) roulent sur des gorges à billes (4, 5) et avec une roue d'entraînement (20, 26) reliée de façon solidaire en rotation avec l'écrou de broche (1), pour l'entraînement de l'écrou de broche (1), l'écrou de broche (1) étant susceptible d'être logé au moyen d'un palier, notamment d'un palier à roulement (7) sur un logement (8), le palier comportant une bague extérieure (9, 23) susceptible d'être fixée sur le boîtier (8), **caractérisé en ce que** la bague extérieure (9, 23) en forme de L vue en coupe longitudinale comporte une bague (15, 29) entourant l'écrou de broche (1), avec une surface de roulement de palier (10, 11) conçue sur sa périphérie intérieure, et une bride radiale (16, 28) se raccordant en monobloc sur une extrémité axiale de la bague (15, 29), la bride radiale (16, 28) étant susceptible d'être fixée sur le boîtier (8) et la bride radiale (28) présentant un diamètre extérieur qui est supérieur au diamètre extérieur de la roue d'entraînement (24).

2. Vis d'entraînement à billes selon la revendication 1, dans laquelle la bague extérieure (9, 23) est formée en tôle, dans un procédé de déformation, notamment par emboutissage.

3. Vis d'entraînement à billes selon la revendication 1, dans laquelle la bride radiale (16, 28) est déportée en direction axiale par rapport à la surface de roulement de palier (10, 11).

4. Vis d'entraînement à billes selon la revendication 1, dans laquelle la surface de roulement de palier (10, 11) est disposée en direction axiale à l'intérieur de la roue d'entraînement (26).

5. Vis d'entraînement à billes selon la revendication 4, dans laquelle une force agissant sur la roue d'entraînement est disposée dans un plan commun avec la surface de roulement de palier.

6. Vis d'entraînement à billes selon la revendication 1, dans laquelle l'écrou de broche (1) est muni sur sa périphérie extérieure d'une surface de roulement de palier (11) rapportée en monobloc, qui coopère avec la surface de roulement de palier (10) de la bague extérieure (9), de préférence en intercalant des corps de roulement roulant sur les surfaces de roulement de palier (10, 11).

7. Vis d'entraînement à billes selon la revendication 1, dans laquelle la bride radiale (28) est conçue pour être élastiquement déformable de sorte que, lorsque le bord (30) de la bride radiale (28) est enserré, des mouvements de basculement de la bague extérieure (23) autour de l'axe de la broche sont possibles.

8. Vis d'entraînement à billes selon la revendication 1, dans laquelle la bride radiale (28) est susceptible d'être fixée sur le logement (8), en intercalant un élément (33) insonorisant les bruits de structure, sans contact métallique de la bride radiale (28) avec le logement (8).
